# EUROPEAN PATENT SPECIFICATION

(11) **EP 3 840 449 B1**
(45) Date of publication and mention of the grant of the patent: **03.04.2024**
(21) Application number: 19216434.1
(22) Date of filing: 16.12.2019
(51) Int. Cl.: H04W 16/18, H04W 24/02, H04W 88/18, H04W 84/12, H04W 28/16

(54) **METHOD TO CONFIGURE AT LEAST ONE OF A PLURALITY OF NETWORK ENTITIES OF A RADIO COMMUNICATIONS NETWORK, COMPUTER PROGRAM PRODUCT, NON-TRANSITORY COMPUTER-READABLE MEDIUM, NETWORK CONFIGURATION MANAGER, AND SYSTEM**
VERFAHREN ZUR KONFIGURIERUNG VON MINDESTENS EINER VIELZAHL VON NETZWERKENTITÄTEN EINES FUNKKOMMUNIKATIONSNETZWERKS, COMPUTERPROGRAMMPRODUKT, NICHTTRANSITORISCHES COMPUTERLESBARES MEDIUM, NETZWERKKONFIGURATIONSMANAGER UND SYSTEM
PROCÉDÉ POUR CONFIGURER AU MOINS D'UNE PLURALITÉ D'ENTITÉS DE RÉSEAU D'UN RÉSEAU DE COMMUNICATIONS RADIO, PRODUIT PROGRAMME INFORMATIQUE, SUPPORT NON TRANSITOIRE LISIBLE PAR ORDINATEUR, GESTIONNAIRE DE CONFIGURATION DE RÉSEAU ET SYSTÈME

(43) Date of publication of application: 23.06.2021
(73) Proprietor: Robert Bosch GmbH, 70442 Stuttgart (DE)
(72) Inventor: Guillaume, Rene, 71032 Boeblingen (DE); Thein, Christoph, 31139 Hildesheim (DE); Rostami, Ahmad, 70469 Stuttgart (DE)

(56) References cited:
- US-A1- 2007 263 587
- US-A1- 2017 272 317
- US-A1- 2018 352 473
- US-A1- 2019 372 852
- Siemens: "SIMATIC NET - Network Management SINEC NMS", , 30 November 2018 (2018-11-30), pages 1-234, XP055696335, Retrieved from the Internet: URL:https://cache.industry.siemens.com/dl/ files/489/109762489/att_968525/v1/BA_SINEC -NMS_76_en-US.pdf [retrieved on 2020-05-18]
- Siemens: "Zukunftssicheres Netzwerkmanagement - Basis für digitale Unternehmen", Youtube, 3 April 2019 (2019-04-03), page 1 pp., XP054980489, Retrieved from the Internet: URL:https://www.youtube.com/watch?v=6laq8o Sgu_0 [retrieved on 2020-05-20]

## Description

### Field of the invention

The invention is directed to a method to configure at least one of a plurality of network entities of a radio communications network, a computer program product, a non-transitory computer-readable medium, a network configuration manager, and a system.

### State of the art

Classical network management comprises a fixed configuration of the network entities like routers or registrations providing the service to other network entities like terminals.

Moreover, radio communication networks in industrial or automotive environments need to comply with certain service and security levels.

US 2018/352473 A1 discloses methods and apparatus for monitoring and controlling access to coexisting first and second networks within a venue. In one embodiment, the first network is a managed content delivery network that includes one or more wireless access points (APs) in data communication with a backend controller which communicates with a dedicated background scanner. The background scanner scans for coexisting networks within the venue, and reports this to the controller. In one variant, the controller dynamically adjusts transmit characteristics of the AP(s) to manage interference between the coexisting networks. In another variant, the controller causes the energy detect threshold of a client device to be lowered so that the device may detect WLAN signals in a scenario where a coexisting RAT (for example, LTE-U or LTE-LAA) occupies the same channel and/or frequency.

US 2017/0272317 A1 discloses systems and methods implemented by a cloudbased controller to control a Wi-Fi network with a plurality of access points include obtaining measurements from the Wi-Fi network; determining a configuration of the Wi-Fi network based on the measurements, wherein the configuration comprises a topology of the Wi-Fi network and the topology comprises the plurality of access points selectively interconnected to one another via backhaul links; and providing the configuration to the Wi-Fi network for implementation thereof.

"SIMATIC NET - Network Management SINEC NMS"; 30. November 2018; pages 1-234 discloses: In the context of digitalization and the Internet of Things, the number of components in industrial networks that communicate and therefore need to be networked is constantly increasing. Guaranteeing the security and availability of the data not only requires professional network planning and implementation, but trained personnel as well. Central network management is essential in order to reliably maintain an overview of all components and the overall status of the network around the clock.

### Disclosure of the invention

The problems of the prior art are solved by a method to configure at least one of a plurality of network entities of a radio communications network according to claim 1, a computer program product according to claim 11, a non-transitory computer-readable medium according to claim 12, a network configuration manager according to claim 13, and a system according to claim 15. Further advantageous features and combinations thereof are found in the following description and in the figures.

A first aspect of the description is directed to a method to configure at least one of a plurality of network entities of a radio communications network, wherein the method comprises: receiving radio-domain operating characteristics via a southbound interface, wherein the received radio-domain operating characteristics represents at least partly a present state of the radio communications network, wherein the radio-domain characteristics comprises at least one of the following: an active QoS parameter, an active traffic class, a number of available radio resources, a number of occupied radio resources and a spatial position of the at least one network entity; receiving environment information via an environment interface, wherein the environment information represents at least partly a present state of an environment in which the plurality of network entities are operating, wherein the environment information comprises at least one of the following: a spatial position of at least one of a plurality of objects not participating in the radio communications network, in particular of objects not necessarily participating in the radio communications network, a spatial dimension of the at least one of a plurality of objects not participating in the radio communications network, in particular of objects not necessarily participating in the radio communications network, a spatial position and size of an opening in a room or building, an operating state of an actuator for opening or closing an opening in the room or building; determining a configuration for the at least one of the plurality of network entities via a configuration determination unit in dependence on the received radio-domain operating characteristics and in dependence on the received environment information; and transmitting the determined configuration towards the at least one of the plurality of network entities via a northbound interface and/or the southbound interface in order to reconfigure the at least one of the plurality of network entities.

Applications, especially those with mobile subscribers or in a highly variable environment, often require dynamic adaptation of the network to the current conditions. This applies in particular to industrial or automotive environments, in which the reliability, security and confidentiality of the data transmission is an essential requirement.

The provision of updated new configurations via southbound and/or northbound interfaces allows an adaption of the radio-domain to the changing environment and maintain reliability, security and confidentiality of the data transmission and also maintain QoS properties like latency. By considering context information about the environment in which the network and the applications are operated, the network management gains additional knowledge to temporarily adapt the network to the current situation. Therefore, the aim is to extend the network configuration capability and to achieve a reliable, secure transmission within the framework of regulatory constraints while making efficient use of resources and taking context information into account.

An advantageous example is characterized by that the method comprises:
recording at least one radio-domain operating characteristics via an acquisition unit; recording environment information via the acquisition unit; recording at least one determined and transmitted configuration via the acquisition unit; and
determining the new configuration for the at least one of the plurality of network entities via the configuration determination unit in dependence on the received radio-domain operating characteristics, in dependence on the received environment information, in dependence on the recorded radio-domain characteristics, in dependence on the recorded environment information and in dependence on the recorded at least one past determined and transmitted configuration.

The continuous analysis of the radio-domain operating characteristics together with current context information and the configuration changes made in the past allows an evaluation of the influences of the dynamic environment and the network configuration on the transmission properties and the optimization of the configuration decisions of the controller by means of suitable algorithms. In other words, the recorded radio-domain operating characteristics, the recorded environment information and the recorded configuration allows an evaluation of the present situation taking into account past situations.

An advantageous example is characterized by that the method comprises: determining the new configuration for the at least one of the plurality of network entities via the configuration determination unit in dependence on optimizing goals and/or in dependence on restrictions set by the user of the network entity and/or in dependence on regulatory constraints.

An advantageous example is characterized by that the method comprises determining the configuration for the at least one of the plurality of network entities via a configuration model in dependence on the received radio-domain operating characteristics and in dependence on the received environment information.

The configuration model advantageously maps the radio-domain characteristics and the environment information to the configuration.

An advantageous example is characterized by that the configuration model is a machine-trained model, in particular a trained artificial neural network or a Gaussian Process model.

Advantageously, the dynamics of the radio network and its environment are learned by the configuration model in order to optimize the determined configuration.

An advantageous example is characterized by that the method comprises: determining an environmental change via an observation unit in dependence on the received environment information; determining a situation analysis via an analysis model in dependence on the received radio-domain operating characteristics and in dependence on the received environment information; judging whether the new configuration has to be applied to the at least one of a plurality of network entities via a judging unit in dependence on the situation analysis; and determining the configuration only if the judging was affirmative.

By including a situation analysis, an overhead in configuration procedures is advantageously avoided.

An advantageous example is characterized by that the analysis model is a machine-trained model, in particular a trained artificial neural network or a Gaussian Process model.

Advantageously, the dynamics of the radio network and its environment is learned by the analysis model in order to optimize the decision to determine and apply the configuration or not.

An advantageous example is characterized by that first received environment information indicates an increase of a radio communication range of the at least one network entity, and wherein the configuration is determined such that the transmission power of the at least one network entity is reduced upon the indicated increase of the radio communication range.

By reducing the transmission power, receivers outside the building or room will not receive the radio signals, therefore protecting the radio communications network from being unauthorized access or radio scanning.

An advantageous example is characterized by that second received environment information indicates a decrease of the radio communication range of the at least one network entity, and wherein the configuration is determined such that the transmission power of the at least one network entity is increased upon the indicated decrease of the radio communication range.

On returning to a safe state, that means, when the operating are of the radio communications network is confined to one spatial area like a room or building, the individual transmission power is increased to guarantee a certain service quality.

An advantageous example is characterized by that third received environment information indicates an increase of a radio communication range of at the at least one network entity, and wherein the configuration is determined such that an encryption measure for the transmitted data is enhanced by the at least one network entity upon the indicated increase in communication range.

The data security increase protects data from unauthorized access by radio scanning.

An advantageous example is characterized by that fourth received environment information indicates a decrease of the radio communication range of the at least one network entity, and wherein the configuration is determined such that an encryption measure for the transmitted data is reduced by the at least one network entity upon the indicated decrease in communication range.

In a secure environment, the data security measures are reduced in order to decrease the overall communication effort.

A second aspect of the description is directed to a computer program product, wherein the computer program product is configured to, when executed on a processor to conduct the method according to the first aspect.

A third aspect of the description is directed to non-transitory computer-readable medium, on which the computer program product according to the second aspect is stored.

A fourth aspect of the description is directed to a network configuration manager for configuring at least one of a plurality of network entities of a radio communications network, wherein the network configuration manager is configured to receive radio-domain operating characteristics via a southbound interface, wherein the received radio-domain operating characteristics represents at least partly a present state of the radio communications network, wherein the radio-domain characteristics comprises at least one of the following: an active QoS parameter, an active traffic class, a number of available radio resources, a number of occupied radio resources and a spatial position of the at least one network entity; receive environment information via an environment interface, wherein the environment information represents at least partly a present state of an environment in which the plurality of network entities are operating, wherein the environment information comprises at least one of the following: a spatial position of at least one of a plurality of objects not participating in the radio communications network, in particular of objects not necessarily participating in the radio communications network, a spatial dimension of the at least one of a plurality of objects not participating in the radio communications network, in particular of objects not necessarily participating in the radio communications network, a spatial position and size of an opening in a room or building, an operating state of an actuator for opening or closing an opening in the room or building; determine a configuration for the at least one of the plurality of network entities via a configuration determination unit in dependence on the received radio-domain operating characteristics and in dependence on the received environment information; and transmit the determined configuration towards the at least one of the plurality of network entities via a northbound interface and/or the southbound interface in order to reconfigure the at least one of the plurality of network entities.

A fifth aspect is directed to a system comprising the network configuration manager according to the fourth aspect and the plurality of network entities of the radio communications network.
- Figures 1 and 2: each schematically depict a network configuration manager;
- Figure 3: schematically depicts a configuration determination unit; and
- Figures 4 and 5: each schematically depict a radio communication network.

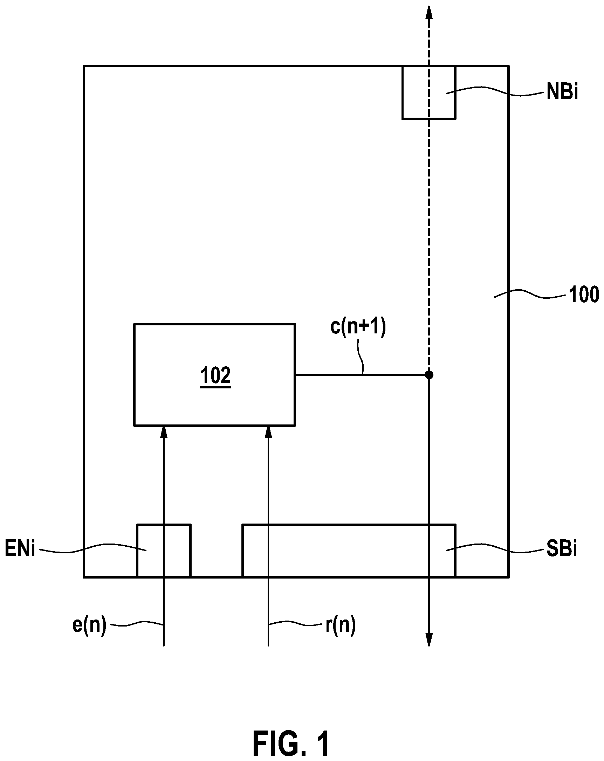

Figure 1 schematically depicts a network configuration manager 100. The network configuration manager 100 is adapted for configuring at least one of a plurality of network entities of a radio communications network. A method to configure the at least one of the plurality of network entities is carried out in accordance with the procedural steps described below.

The network configuration manager 100 is configured to receive radio-domain operating characteristics r(n) via a southbound interface SBi, wherein the received radio-domain operating characteristics r(n) represents at least partly a present state of the radio communications network.

The network configuration manager 100 is configured to receive environment information e(n) via an environment interface ENi, wherein the environment information e(n) represents at least partly a present state of an environment in which the plurality of network entities are operating.

The network configuration manager 100 is configured to determine a configuration c(n+1) for the at least one of the plurality of network entities via a configuration determination unit 102 in dependence on the received radio-domain operating characteristics rn and in dependence on the received environment information e(n).

The network configuration manager 100 is configured to transmit the determined configuration c(n+1) towards the at least one of the plurality of network entities via a northbound interface NBi and/or the southbound interface SBi in order to reconfigure the at least one of the plurality of network entities.

A computer program product is configured to, when executed on a processor to conduct the method according to the present description. A non-transitory computer-readable medium is provided, on which the former computer program product is stored.

A system comprises the network configuration manager 100 and the plurality of network entities of the radio communications network.

The southbound interface SBi implements a protocol specification to enable communication between the network configuration manager 100 and at least the network traffic managing network entities. The determined network configuration c defines, after being implemented on the respective network entity, network paths, radio bearers, available radio resources, and the like.

The northbound interface NBi implements a protocol specification to enable communication between the network configuration manager 100 and applications or higher layer control programs. For example a firewall application, an encryption control manager, a data queuing control manager, and the like.

The environment interface ENi implements a protocol specification to enable communication between the network configuration manager 100 and entities defining at least a part of the environment in which the network entities of the radio communications network operate. So for example, cameras and image recognition entities are directed to and reproduce representations of the environment in order to communicate the detected state of the environment to the network configuration manager 100. Moreover, the state of doors, windows or moving entities in the environment of the radio communications network communicate their state and position to the configuration manager 100 via the environment interface ENi.

The reference numeral n determines a first point in time or at least a certain first period in time. The reference numeral n-1 indicates a second point in time before the first point in time or a second period in time before the first period in time. The reference numeral n+1 indicates a third point in time after the first point in time or a third period in time after the first period in time.

The radio-domain operating characteristics r received via the southbound interface SBi comprises at least one of the following:
- an active QoS parameter,
- an active traffic class,
- a number of available resource, for example radio resources,
- a number of occupied resources, for example radio resources, and
- a spatial position of the at least one network entity.

The environment information e received via the environment interface ENi comprises at least one of the following:
- a spatial position of at least one of a plurality of objects not participating in the radio communications network, in particular of objects not necessarily participating in the radio communications network,
- a spatial dimension of the at least one of a plurality of objects not participating in the radio communications network, in particular of objects not necessarily participating in the radio communications network,
- a spatial position and size of an opening in a room or building,
- an operating state of an actuator for opening or closing an opening in the room or building.

The configuration c for the at least one network entity comprises at least one of the following:
- a radio transmission power of the at least one of the plurality of network entities, transmitted via the southbound interface SBi,
- security measures to protect data which is to be transmitted via a radio channel, transmitted via the northbound interface NBi ,
- temporarily queuing data, which is to be protected, in at least one of the plurality of network entities, transmitted, for example via the northbound interface NBi,
- switching a bearer, for example a radio bearer, for data to be transmitted, transmitted via the southbound interface SBi,
- network path for data to be transmitted, transmitted via the southbound interface SBi.

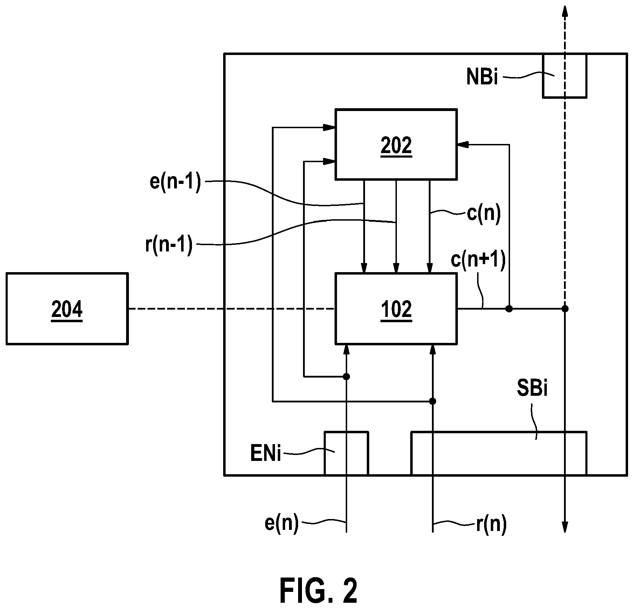

Figure 2 schematically depicts the network configuration manager 100 in more detail. An acquisition unit 202 is configured to record at least one radio-domain operating characteristics r(n-1); record environment information e(n-1) ; and record at least one determined and transmitted configuration c(n). The configuration determination unit 102 is configured to determine the new configuration c(n+1) for the at least one of the plurality of network entities in dependence on the received radio-domain operating characteristics r(n), in dependence on the received environment information e(n), in dependence on the recorded radio-domain characteristics r(n-1), in dependence on the recorded environment information r(n-1) and in dependence on the recorded at least one past determined and transmitted configuration c(n).

A configuration model 204 is provided to determine the configuration c(n+1) for the at least one of the plurality of network entities in dependence on the received radio-domain operating characteristics r(n) and in dependence on the received environment information e(n).

The configuration model 204 is a machine-trained model, in particular a trained artificial neural network or a Gaussian Process model.

In another example, the configuration model 204 is a deterministic mapping function.

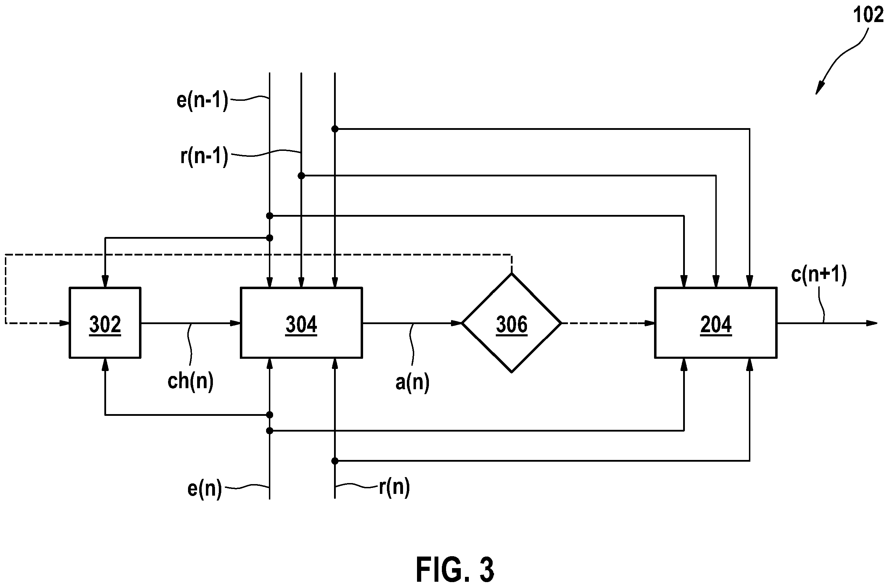

Figure 3 schematically depicts the configuration determination unit 102. An observation unit 302 determines an environmental change ch(n) in dependence on the received environment information e(n).

An analysis model 304 determines a situation analysis a(n) in dependence on the received radio-domain operating characteristics r(n) and in dependence on the received environment information e(n).

The analysis model 304 is a machine-trained model, in particular a trained artificial neural network or a Gaussian Process model.

According to an example, the analysis model 304 is a deterministic mapping function.

A judging unit 306 judges whether the new configuration - to be determined - has to be applied to the at least one of a plurality of network entities in dependence on the situation analysis a(n). If the situation analysis a(n) indicates the necessity of an adaptation of the network configuration c, the configuration model 204 decides. For example, this can be the result of a calculation based on the information detected at the beginning of the process or it can be done with the help of predefined decision rules.

The configuration model 204 determines the new configuration c(n+1) only if the judging was affirmative. The configuration model 204 decides which adaptation of the at least one network entitiy of the radio communciations network is the most appropriate. For example, the configuration model 204 correlates the respective information components or applies a logical comparison with predefined rules.

On the basis of the environment information and the received radio operating characteristics r in combination with the past configuration changes, the configuration model was machine-learned and knows the influences of the environmental changes and the configuration changes on the transmission properties. This knowledge gained can then be used for future analyses and decision-making processes in order to optimise the network adaptations to the respective framework conditions.

Alternatively, the configuration c(n+1) is determined via the model 204 and a comparison of the configurations c(n) and c(n+1) is be used to judge whether the determined configuration c(n+1) has to be transmitted and applied to the at least one network entity. In this case, the analysis model 304 is left out.

The models 304 and 204 do not necessarily have to be implemented as part of the network configuration unit 100, but can also be provided as a service by an external application, for example being arranged in the backhaul network or cloud.

So a new configuration c(n+1) is determined, for example,
- if the illegitimate reception of the data is normally prevented by a shielding environment and this shielding is no longer be guaranteed for a certain time due to a change in the environment, wherein the new configuration comprises to apply additional security measures at least for confidential marked data;
- if a change in the environment indicates the reduction of intentional or unintentional interference of several normally shielded radio communication networks which are not shielded from each other at least for a certain time, wherein the new configuration comprises to apply a reduction of transmission power;
- if a change in environment indicates that a used network path does not longer fulfill the required quality of service, wherein the new configuration comprises to apply a new network path.

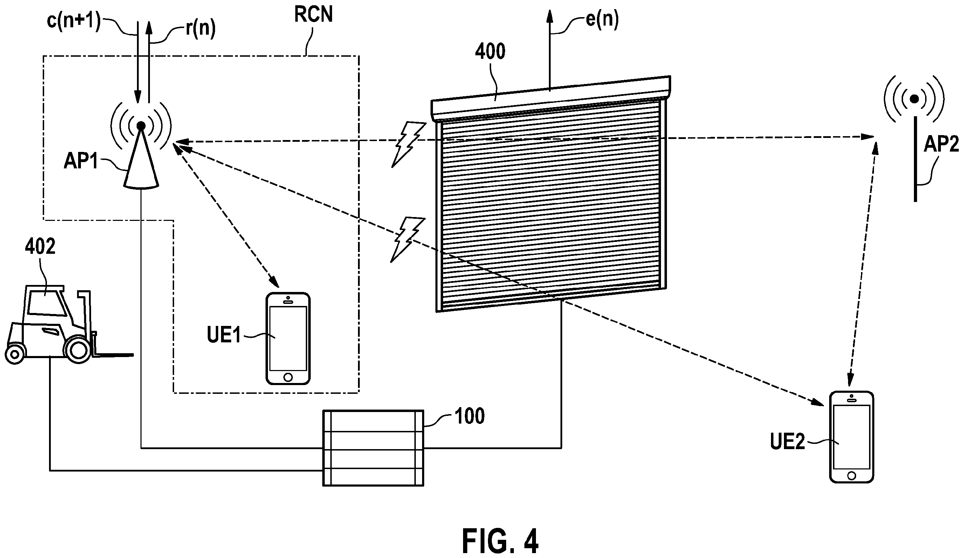

Figure 4 schematically depicts the radio communication network RCN which is to be protected from scanning. As part of an industrial network, a network entity AP1 configured as a radio station communicates with a network entity UE1 configured as a radio terminal. The network entity AP1 is configured by the network configuration manager 100.

In the shown example, a door 400 for entering vehicles into the building is in a closed state and therefore the radio communications network RCN and its radio waves are shielded to prevent an external network entity AP2 configured as a radio station and a network entity UE2 configured as a terminal from receiving transmissions from the network entities AP1 and UE1 outside the building.

Also a moving object 402 like a forklift truck may impair radio communications by disturbing a line-of-sight radio communication. Therefore, the moving object 402 transmits its present position to the network configuration manager 100.

Second received environment information e(n) indicates a decrease of the radio communication range of the at least one network entity AP1, UE1. The configuration c(n+1) is determined such that the transmission power of the at least one network entity AP1, UE1 is increased upon the indicated decrease of the radio communication range.

Fourth received environment information e(n) indicates a decrease of the radio communication range of the at least one network entity AP1, UE1. The configuration c(n+1) is determined such that an encryption measure for the transmitted data is reduced by the at least one network entity AP1, UE1 upon the indicated decrease in communication range.

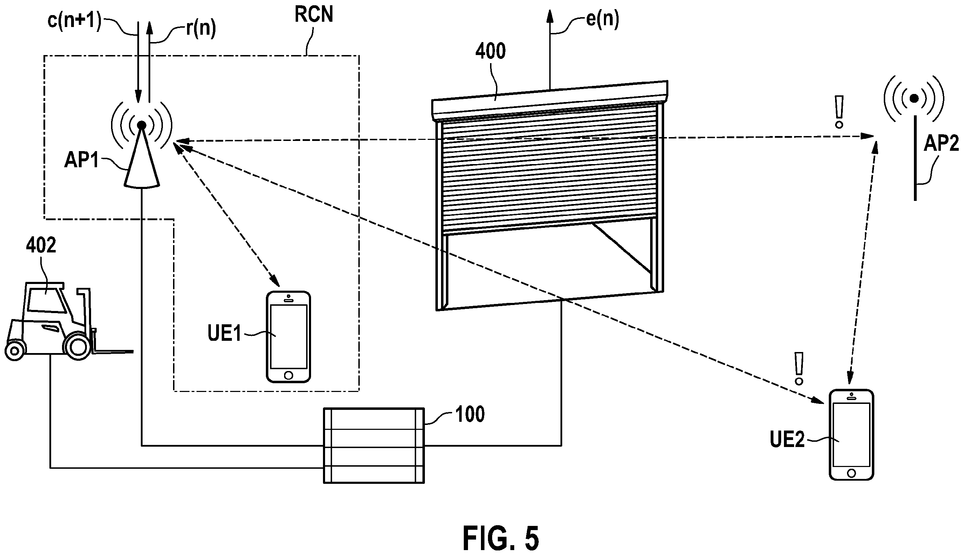

Figure 5 schematically depicts the radio communication network RCN.

If the door 400 is now opened, shielding is temporarily no longer possible and the external network entities AP2 and UE2 receive the transmission from at least one of the network entities AP1 and UE1. This leads to unwanted interference between the radio networks of the network entities AP1 and AP2, but can also allow confidential data to be read by AP2 and UE2 (e.g. if encryption is not possible or does not promise sufficient security). The network configuration manager 100 recognizes the changed state of the now opened door 400 and adapts the transmission behavior of the network.

For example, the network entity AP1 does not send confidential data for a certain time and instead uses the communication resources to transmit non-critical data.

Alternatively, the network entity AP1 adjusts its transmission power or radiation direction so that the network entities AP2 and UE2 are no longer within the transmission range of the network entity AP1.

In another example, the network configuration manager 100 determines that communication between AP1 and UE2 is now possible for a certain time and instructs AP1 to prioritize the transmission of data to UE2 before communication through the closed door 400 is no longer possible.

First received environment information e(n) indicates an increase of a radio communication range of the at least one network entity AP1, UE1. The configuration c(n+1) is determined such that the transmission power of the at least one network entity AP1, UE1 is reduced upon the indicated increase of the radio communication range.

Third received environment information e(n) indicates an increase of a radio communication range of at the at least one network entity AP1, UE1. The configuration c(n+1) is determined such that an encryption measure for the transmitted data is enhanced by the at least one network entity AP1, UE1 upon the indicated increase in communication range.

## Claims

1. A method performed by a network configuration manager (100) to configure at least one of a plurality of network entities (AP1, UE1) of a radio communications network (RCN), wherein the method comprises:
receiving radio-domain operating characteristics (r(n)) via a southbound interface (SBi), wherein the received radio-domain operating characteristics (r(n)) represents at least partly a present state of the radio communications network (RCN), wherein the radio-domain characteristics (r(n)) comprises at least one of the following: an active QoS parameter, an active traffic class, a number of available radio resources, a number of occupied radio resources, and a spatial position of the at least one network entity;
receiving environment information (e(n)) via an environment interface (ENi), wherein the environment information (e(n)) represents at least partly a present state of an environment in which the plurality of network entities (AP1, UE1) are operating, wherein the environment information (e(n)) comprises at least one of the following: a spatial position of at least one of a plurality of objects not participating in the radio communications network, in particular of objects not necessarily participating in the radio communications network, a spatial dimension of the at least one of a plurality of objects not participating in the radio communications network, in particular of objects not necessarily participating in the radio communications network, a spatial position and size of an opening in a room or building, an operating state of an actuator for opening or closing an opening in the room or building;
determining a configuration (c(n+1)) for the at least one of the plurality of network entities (AP1, UE1) via a configuration determination unit (102) in dependence on the received radio-domain operating characteristics (r(n)) and in dependence on the received environment information (e(n)); and
transmitting the determined configuration (c(n+1)) towards the at least one of the plurality of network entities (AP1, UE1) via a northbound interface (NBi) and/or the southbound interface (SBi) in order to reconfigure the at least one of the plurality of network entities (AP1, UE1).

2. The method according to claim 1, wherein the method comprises:
recording at least one radio-domain operating characteristics (r(n-1)) via an acquisition unit (202);
recording environment information (e(n-1)) via the acquisition unit (202);
recording at least one determined and transmitted configuration (c(n)) via the aquisition unit (202); and
determining the new configuration (c(n+1)) for the at least one of the plurality of network entities (AP1, UE1) via the configuration determination unit (102) in dependence on the received radio-domain operating characteristics (r(n)), in dependence on the received environment information (e(n)), in dependence on the recorded radio-domain characteristics (r(n-1)), in dependence on the recorded environment information (r(n-1)) and in dependence on the recorded at least one past determined and transmitted configuration (c(n)).

3. The method according to one of the preceding claims, wherein the method comprises:
determining the configuration (c(n+1)) for the at least one of the plurality of network entities (AP1, UE1) via a configuration model (204) in dependence on the received radio-domain operating characteristics (r(n)) and in dependence on the received environment information (e(n)).

4. The method according to claim 3, wherein the configuration model (204) is a machine-trained model.

5. The method according to claim 3 or 4, wherein the method comprises:
determining an environmental change (ch(n)) via an observation unit (302) in dependence on the received environment information (e(n));
determining a situation analysis (a(n)) via an analysis model (304) in dependence on the received radio-domain operating characteristics (r(n)) and in dependence on the received environment information (e(n));
judging whether the new configuration has to be applied to the at least one of a plurality of network entities (AP1, UE1) via a judging unit (306) in dependence on the situation analysis (a(n)); and
determining the configuration (c(n+1)) only if the judging was affirmative.

6. The method according to claim 5, wherein the analysis model (304) is a machine-trained model.

7. The method according to one of the preceding claims, wherein first received environment information (e(n)) indicates an increase of a radio communication range of the at least one network entity (AP1, UE1), and wherein the configuration (c(n+1) is determined for reducing the transmission power of the at least one network entity (AP1, UE1) upon the indicated increase of the radio communication range.

8. The method according to the preceding claims, wherein second received environment information (e(n)) indicates a decrease of the radio communication range of the at least one network entity (AP1, UE1), and wherein the configuration (c(n+1) is determined for increasing the transmission power of the at least one network entity (AP1, UE1) upon the indicated decrease of the radio communication range.

9. The method according to one of the preceding claims, wherein third received environment information (e(n)) indicates an increase of a radio communication range of at the at least one network entity (AP1, U E1), and wherein the configuration (c(n+1)) is determined for enhancing an encryption measure for the transmitted data is the at least one network entity (AP1, UE1) upon the indicated increase in communication range.

10. The method according to one of the preceding claims, wherein fourth received environment information (e(n)) indicates a decrease of the radio communication range of the at least one network entity (AP1, UE1), and wherein the configuration (c(n+1)) is determined for reducing an encryption measure for the transmitted data by the at least one network entity (AP1, UE1) upon the indicated decrease in communication range.

11. A computer program product, wherein the computer program product is configured to, when executed on a processor of a network configuration manager (100) to perform the method according to one of the preceding claims.

12. A non-transitory computer-readable medium, on which the computer program product according to the preceding claim is stored.

13. A network configuration manager (100) for configuring at least one of a plurality of network entities (AP1, UE1) of a radio communications network (RCN), wherein the network configuration manager (100) is configured to receive radio-domain operating characteristics (r(n)) via a southbound interface (SBi), wherein the received radio-domain operating characteristics (r(n)) represents at least partly a present state of the radio communications network (RCN), wherein the radio-domain characteristics (r(n)) comprises at least one of the following: an active QoS parameter, an active traffic class, a number of available radio resources, a number of occupied radio resources, and a spatial position of the at least one network entity;
receive environment information (e(n)) via an environment interface (ENi),
wherein the environment information (e(n)) represents at least partly a present state of an environment in which the plurality of network entities (AP1, UE1) are operating, wherein the environment information (e(n)) comprises at least one of the following: a spatial position of at least one of a plurality of objects not participating in the radio communications network, in particular of objects not necessarily participating in the radio communications network, a spatial dimension of the at least one of a plurality of objects not participating in the radio communications network, in particular of objects not necessarily participating in the radio communications network, a spatial position and size of an opening in a room or building, an operating state of an actuator for opening or closing an opening in the room or building;
determine a configuration (c(n+1)) for the at least one of the plurality of network entities (AP1, UE1) via a configuration determination unit (102) in dependence on the received radio-domain operating characteristics (r(n)) and in dependence on the received environment information (e(n)); and
transmit the determined configuration (c(n+1)) towards the at least one of the plurality of network entities (AP1, UE1) via a northbound interface (NBi) and/or the southbound interface (SBi) in order to reconfigure the at least one of the plurality of network entities (AP1, UE1).

14. The network configuration manager (100) according to claim 13, wherein the network configuration manager (100) is configured to implement the method according to one of the claims 2 to 10.

15. A system comprising the network configuration manager (100) according to claim 13 or 14 and the plurality of network entities (AP1, UE1) of the radio communications network (RCN).

## Patentansprüche

1. Verfahren, das von einem Netzwerkkonfigurationsmanager (100) durchgeführt wird, um mindestens eine aus einer Vielzahl von Netzwerkeinheiten (AP1, UE1) eines Funkkommunikationsnetzwerks (RCN) zu konfigurieren, wobei das Verfahren Folgendes umfasst:
Empfangen von Funkdomänen-Betriebseigenschaften (r(n)) über eine Southbound-Schnittstelle (SBi), wobei die empfangenen Funkdomänen-Betriebseigenschaften (r(n)) zumindest teilweise einen gegenwärtigen Zustand des Funkkommunikationsnetzwerks (RCN) darstellen, wobei die Funkdomänen-Eigenschaften (r(n)) mindestens eines der folgenden Elemente umfassen: einen aktiven QoS-Parameter, eine aktive Verkehrsklasse, eine Anzahl verfügbarer Funkressourcen, eine Anzahl belegter Funkressourcen und eine räumliche Position der mindestens einen Netzwerkeinheit;
Empfangen von Umgebungsinformationen (e(n)) über eine Umgebungsschnittstelle (ENi), wobei die Umgebungsinformationen (e(n)) zumindest teilweise einen gegenwärtigen Zustand einer Umgebung darstellen, in der die Vielzahl von Netzwerkeinheiten (AP1, UE1) arbeiten, wobei die Umgebungsinformationen (e(n)) mindestens eines der folgenden Merkmale umfassen: eine räumliche Position mindestens eines aus einer Vielzahl von nicht am Funkkommunikationsnetzwerk teilnehmenden Objekten, insbesondere von nicht notwendigerweise am Funkkommunikationsnetzwerk teilnehmenden Objekten, eine räumliche Ausdehnung des mindestens einen aus einer Vielzahl von nicht am Funkkommunikationsnetzwerk teilnehmenden Objekten, insbesondere von nicht notwendigerweise am Funkkommunikationsnetzwerk teilnehmenden Objekten, eine räumliche Position und Größe einer Öffnung in einem Raum oder Gebäude, einen Betriebszustand eines Aktuators zum Öffnen oder Schließen einer Öffnung in dem Raum oder Gebäude;
Bestimmen einer Konfiguration (c(n+1)) für die mindestens eine der Vielzahl von Netzwerk-Entitäten (AP1, UE1) über eine Konfigurationsbestimmungseinheit (102) in Abhängigkeit von den empfangenen Funkdomänen-Betriebseigenschaften (r(n)) und in Abhängigkeit von den empfangenen Umgebungsinformationen (e(n)); und
Übertragen der bestimmten Konfiguration (c(n+1)) in Richtung der mindestens einen der Vielzahl von Netzwerk-Entitäten (AP1, UE1) über eine Northbound-Schnittstelle (NBi) und/oder die Southbound-Schnittstelle (SBi), um die mindestens eine der Vielzahl von Netzwerk-Entitäten (AP1, UE1) neu zu konfigurieren.

2. Verfahren nach Anspruch 1, wobei das Verfahren Folgendes umfasst:
Aufzeichnen von mindestens einer Funkdomänen-Betriebseigenschaft (r(n-1)) über eine Erfassungseinheit (202) ;
Aufzeichnen von Umgebungsinformationen (e(n-1)) über die Erfassungseinheit (202);
Aufzeichnen mindestens einer bestimmten und übertragenen Konfiguration (c(n)) über die Erfassungseinheit (202); und
Bestimmen der neuen Konfiguration (c(n+1)) für die mindestens eine der Vielzahl von Netzwerk-Entitäten (AP1, UE1) über die Konfigurationsbestimmungseinheit (102) in Abhängigkeit von den empfangenen Funkdomänen-Betriebseigenschaften (r(n)), in Abhängigkeit von den empfangenen Umgebungsinformationen (e(n)), in Abhängigkeit von den aufgezeichneten Funkdomänen-Eigenschaften (r(n-1)), in Abhängigkeit von den aufgezeichneten Umgebungsinformationen (r(n-1)) und in Abhängigkeit von der aufgezeichneten mindestens einen zuvor bestimmten und übertragenen Konfiguration (c(n)).

3. Verfahren nach einem der vorhergehenden Ansprüche, wobei das Verfahren Folgendes umfasst:
Bestimmen der Konfiguration (c(n+1)) für die mindestens eine der Vielzahl von Netzwerk-Entitäten (AP1, UE1) über ein Konfigurationsmodell (204) in Abhängigkeit von den empfangenen Funkdomänen-Betriebseigenschaften (r(n)) und in Abhängigkeit von den empfangenen Umgebungsinformationen (e(n)).

4. Verfahren nach Anspruch 3, wobei das Konfigurationsmodell (204) ein maschinell trainiertes Modell ist.

5. Verfahren nach Anspruch 3 oder 4, wobei das Verfahren Folgendes umfasst:
Bestimmen einer Umgebungsänderung (ch(n)) über eine Beobachtungseinheit (302) in Abhängigkeit von den empfangenen Umgebungsinformationen (e(n));
Bestimmen einer Situationsanalyse (a(n)) über ein Analysemodell (304) in Abhängigkeit von den empfangenen Funkdomänen-Betriebseigenschaften (r(n)) und in Abhängigkeit von den empfangenen Umgebungsinformationen (e(n));
Beurteilen, ob die neue Konfiguration über eine Beurteilungseinheit (306) in Abhängigkeit von der Situationsanalyse (a(n)) auf die mindestens eine einer Vielzahl von Netzwerk-Entitäten (AP1, UE1) angewendet werden muss; und
Bestimmen der Konfiguration (c(n+1)) nur falls die Beurteilung positiv ausfiel.

6. Verfahren nach Anspruch 5, wobei das Analysemodell (304) ein maschinell trainiertes Modell ist.

7. Verfahren nach einem der vorhergehenden Ansprüche, wobei eine erste empfangene Umgebungsinformation (e(n)) eine Vergrößerung einer Funkkommunikationsreichweite der mindestens einen Netzwerk-Entität (AP1, UE1) anzeigt, und wobei die Konfiguration (c(n+1)) zur Reduzierung der Sendeleistung der mindestens einen Netzwerk-Entität (AP1, UE1) bei der angezeigten Vergrößerung der Funkkommunikationsreichweite bestimmt wird.

8. Verfahren nach einem der vorhergehenden Ansprüche, wobei eine zweite empfangene Umgebungsinformation (e(n)) eine Verringerung der Funkkommunikationsreichweite der mindestens einen Netzwerk-Entität (AP1, UE1) anzeigt, und wobei die Konfiguration (c(n+1)) zur Erhöhung der Sendeleistung der mindestens einen Netzwerk-Entität (AP1, UE1) bei der angezeigten Verringerung der Funkkommunikationsreichweite bestimmt wird.

9. Verfahren nach einem der vorhergehenden Ansprüche, wobei eine dritte empfangene Umgebungsinformation (e(n)) eine Vergrößerung einer Funkkommunikationsreichweite der mindestens einen Netzwerk-Entität (AP1, UE1) anzeigt, und wobei die Konfiguration (c(n+1)) bestimmt wird, um ein Verschlüsselungsmaß für die übertragenen Daten der mindestens einen Netzwerk-Entität (AP1, UE1) bei der angezeigten Vergrößerung der Kommunikationsreichweite zu verbessern.

10. Verfahren nach einem der vorhergehenden Ansprüche, wobei die vierte empfangene Umgebungsinformation (e(n)) eine Verringerung der Funkkommunikationsreichweite der mindestens einen Netzwerk-Entität (AP1, UE1) anzeigt, und wobei die Konfiguration (c(n+1)) bestimmt wird, um ein Verschlüsselungsmaß für die übertragenen Daten durch die mindestens eine Netzwerk-Entität (AP1, UE1) bei der angegebenen Verringerung der Kommunikationsreichweite zu reduzieren.

11. Computerprogrammprodukt, wobei das Computerprogrammprodukt ausgebildet ist, um, wenn es auf einem Prozessor eines Netzwerkkonfigurationsmanagers (100) ausgeführt wird, das Verfahren nach einem der vorhergehenden Ansprüche durchzuführen.

12. Nichttransitorisches computerlesbares Medium, auf dem das Computerprogrammprodukt nach dem vorhergehenden Anspruch gespeichert ist.

13. Netzwerkkonfigurationsmanager (100) zum Konfigurieren von mindestens einer einer Vielzahl von Netzwerk-Entitäten (AP1, UE1) eines Funkkommunikationsnetzwerks (RCN), wobei der Netzwerkkonfigurationsmanager (100) für Folgendes ausgebildet ist:
Empfangen von Funkdomänen-Betriebseigenschaften (r(n)) über eine Southbound-Schnittstelle (SBi), wobei die empfangenen Funkdomänen-Betriebseigenschaften (r(n)) zumindest teilweise einen gegenwärtigen Zustand des Funkkommunikationsnetzwerks (RCN) darstellen, wobei die Funkdomänen-Eigenschaften (r(n)) mindestens eines der folgenden Elemente umfassen: einen aktiven QoS-Parameter, eine aktive Verkehrsklasse, eine Anzahl verfügbarer Funkressourcen, eine Anzahl belegter Funkressourcen und eine räumliche Position der mindestens einen Netzwerk-Entität;
Empfangen von Umgebungsinformationen (e(n)) über eine Umgebungsschnittstelle (ENi), wobei die Umgebungsinformationen (e(n)) zumindest teilweise einen gegenwärtigen Zustand einer Umgebung darstellen, in der die Vielzahl von Netzwerkeinheiten (AP1, UE1) arbeiten, wobei die Umgebungsinformationen (e(n)) mindestens eines der folgenden Merkmale umfassen: eine räumliche Position mindestens eines aus einer Vielzahl von nicht am Funkkommunikationsnetzwerk teilnehmenden Objekten, insbesondere von nicht notwendigerweise am Funkkommunikationsnetzwerk teilnehmenden Objekten, eine räumliche Ausdehnung des mindestens einen aus einer Vielzahl von nicht am Funkkommunikationsnetzwerk teilnehmenden Objekten, insbesondere von nicht notwendigerweise am Funkkommunikationsnetzwerk teilnehmenden Objekten, eine räumliche Position und Größe einer Öffnung in einem Raum oder Gebäude, einen Betriebszustand eines Aktuators zum Öffnen oder Schließen einer Öffnung in dem Raum oder Gebäude;
Bestimmen einer Konfiguration (c(n+1)) für die mindestens eine der Vielzahl von Netzwerk-Entitäten (AP1, UE1) über eine Konfigurationsbestimmungseinheit (102) in Abhängigkeit von den empfangenen Funkdomänen-Betriebseigenschaften (r(n)) und in Abhängigkeit von den empfangenen Umgebungsinformationen (e(n)); und
Übertragen der bestimmten Konfiguration (c(n+1)) in Richtung der mindestens einen der Vielzahl von Netzwerk-Entitäten (AP1, UE1) über eine Northbound-Schnittstelle (NBi) und/oder die Southbound-Schnittstelle (SBi), um die mindestens eine der Vielzahl von Netzwerk-Entitäten (AP1, UE1) neu zu konfigurieren.

14. Netzwerkkonfigurationsmanager (100) nach Anspruch 13, wobei der Netzwerkkonfigurationsmanager (100) ausgebildet ist, um das Verfahren nach einem der Ansprüche 2 bis 10 zu implementieren.

15. System, das den Netzwerkkonfigurationsmanager (100) nach Anspruch 13 oder 14 und die Vielzahl von Netzwerk-Entitäten (AP1, UE1) des Funkkommunikationsnetzwerks (RCN) umfasst.

## Revendications

1. Procédé exécuté par un gestionnaire de configuration de réseau (100) pour configurer au moins l'une d'une pluralité d'entités de réseau (AP1, UE1) d'un réseau de radiocommunications (RCN), le procédé comprenant les étapes suivantes :
recevoir des caractéristiques de fonctionnement du domaine radio (r(n)) par l'intermédiaire d'une interface sud (SBi), les caractéristiques de fonctionnement du domaine radio reçues (r(n)) représentant au moins partiellement un état présent du réseau de radiocommunications (RCN), les caractéristiques du domaine radio (r(n)) comprenant au moins l'un des éléments suivants : un paramètre QoS actif, une classe de trafic active, un nombre de ressources radio disponibles, un nombre de ressources radio occupées et une position spatiale de l'au moins une entité de réseau ;
recevoir des informations sur l'environnement (e(n)) par l'intermédiaire d'une interface d'environnement (ENi), les informations sur l'environnement (e(n)) représentant au moins partiellement l'état présent d'un environnement dans lequel la pluralité d'entités de réseau (AP1, UE1) fonctionnent, les informations sur l'environnement (e(n)) comprenant au moins l'un des éléments suivants : une position spatiale d'au moins un objet parmi une pluralité d'objets ne participant pas au réseau de radiocommunications, en particulier d'objets ne participant pas nécessairement au réseau de radiocommunications, une dimension spatiale de l'au moins un objet parmi une pluralité d'objets ne participant pas au réseau de radiocommunications, en particulier d'objets ne participant pas nécessairement au réseau de radiocommunications, une position spatiale et la taille d'une ouverture dans une pièce ou un bâtiment, un état de fonctionnement d'un actionneur pour ouvrir ou fermer une ouverture dans la pièce ou le bâtiment ;
déterminer une configuration (c(n+1)) pour l'une au moins de la pluralité d'entités de réseau (AP1, UE1) par l'intermédiaire d'une unité de détermination de configuration (102) en fonction des caractéristiques de fonctionnement du domaine radio reçues (r(n)) et en fonction des informations sur l'environnement reçues (e(n)) ; et
transmettre la configuration déterminée (c(n+1)) à l'une au moins de la pluralité d'entités de réseau (AP1, UE1) par l'intermédiaire d'une interface nord (NBi) et/ou d'une interface sud (SBi) afin de reconfigurer l'une au moins de la pluralité d'entités de réseau (AP1, UE1).

2. Procédé selon la revendication 1, dans lequel le procédé comprend les étapes suivantes :
enregistrer au moins une caractéristique de fonctionnement du domaine radio (r(n-1)) par l'intermédiaire d'une unité d'acquisition (202) ;
enregistrer des informations sur l'environnement (e(n-1)) par l'intermédiaire de l'unité d'acquisition (202) ; enregistrer au moins une configuration déterminée et transmise (c(n)) par l'intermédiaire de l'unité d'acquisition (202) ; et
déterminer la nouvelle configuration (c(n+1)) pour l'une au moins de la pluralité d'entités de réseau (AP1, UE1) par l'intermédiaire de l'unité de détermination de la configuration (102) en fonction des caractéristiques de fonctionnement du domaine radio reçues (r(n)), en fonction des informations sur l'environnement reçues (e(n)), en fonction des caractéristiques du domaine radio enregistrées (r(n-1)), en fonction des informations sur l'environnement enregistrées (r(n-1)) et en fonction de l'enregistrement d'au moins une configuration déterminée et transmise antérieurement (c(n)).

3. Procédé selon l'une des revendications précédentes, dans lequel le procédé comprend les étapes suivantes :
déterminer la configuration (c(n+1)) pour l'une au moins de la pluralité d'entités de réseau (AP1, UE1) par l'intermédiaire d'un modèle de configuration (204) en fonction des caractéristiques de fonctionnement du domaine radio reçues (r(n)) et en fonction des informations sur l'environnement reçues (e(n)).

4. Procédé selon la revendication 3, dans lequel le modèle de configuration (204) est un modèle entraîné par une machine.

5. Procédé selon la revendication 3 ou la revendication 4, dans lequel le procédé comprend les étapes suivantes :
déterminer un changement environnemental (ch(n)) par l'intermédiaire d'une unité d'observation (302) en fonction des informations sur l'environnement reçues (e(n)) ;
déterminer une analyse de la situation (a(n)) par l'intermédiaire d'un modèle d'analyse (304) en fonction des caractéristiques de fonctionnement du domaine radio reçues (r(n)) et en fonction des informations sur l'environnement reçues (e(n)) ;
juger si la nouvelle configuration doit être appliquée à au moins une de la pluralité d'entités de réseau (AP1, UE1) par l'intermédiaire d'une unité de jugement (306) en fonction de l'analyse de la situation (a(n)) ; et
déterminer la configuration (c(n+1)) uniquement si le jugement a été positif.

6. Procédé selon la revendication 5, dans lequel le modèle d'analyse (304) est un modèle entraîné par une machine.

7. Procédé selon l'une des revendications précédentes, dans lequel les premières informations sur l'environnement reçues (e(n)) indiquent une augmentation d'une portée de communication radio de l'au moins une entité de réseau (AP1, UE1), et dans lequel la configuration (c(n+1)) est déterminée pour réduire la puissance d'émission de l'au moins une entité de réseau (AP1, UE1) lors de l'augmentation indiquée de la portée de communication radio.

8. Procédé selon les revendications précédentes, dans lequel les deuxièmes informations sur l'environnement reçues (e(n)) indiquent une diminution de la portée de communication radio de l'au moins une entité de réseau (AP1, UE1), et dans lequel la configuration (c(n+1)) est déterminée pour augmenter la puissance de transmission d'au moins une entité de réseau (AP1, UE1) lors de la diminution indiquée de la portée de communication radio.

9. Procédé selon l'une des revendications précédentes, dans lequel les troisièmes informations sur l'environnement reçues (e(n)) indiquent une augmentation de la portée de communication radio de l'au moins une entité de réseau (AP1, UE1), et dans lequel la configuration (c(n+1)) est déterminée pour améliorer une mesure de cryptage pour les données transmises par l'au moins une entité de réseau (AP1, UE1) lors de l'augmentation indiquée de la portée de communication.

10. Procédé selon l'une des revendications précédentes, dans lequel les quatrièmes informations sur l'environnement reçues (e(n)) indiquent une diminution de la portée de communication radio de l'au moins une entité de réseau (AP1, UE1), et dans lequel la configuration (c(n+1)) est déterminée pour réduire une mesure de cryptage pour les données transmises par l'au moins une entité de réseau (AP1, UE1) lors de la diminution indiquée de la portée de communication.

11. Produit programme d'ordinateur, dans lequel le produit programme d'ordinateur est configuré, lorsqu'il est exécuté sur un processeur d'un gestionnaire de configuration de réseau (100), pour exécuter le procédé selon l'une des revendications précédentes.

12. Support non transitoire lisible par ordinateur, sur lequel est stocké le produit de programme d'ordinateur selon la revendication précédente.

13. Gestionnaire de configuration de réseau (100) pour configurer au moins une d'une pluralité d'entités de réseau (AP1, UE1) d'un réseau de radiocommunications (RCN), dans lequel le gestionnaire de configuration de réseau (100) est configuré pour :
recevoir des caractéristiques de fonctionnement du domaine radio (r(n)) par l'intermédiaire d'une interface sud (SBi), les caractéristiques de fonctionnement du domaine radio reçues (r(n)) représentant au moins partiellement un état présent du réseau de radiocommunications (RCN), les caractéristiques du domaine radio (r(n)) comprenant au moins l'un des éléments suivants : un paramètre QoS actif, une classe de trafic active, un nombre de ressources radio disponibles, un nombre de ressources radio occupées et une position spatiale de l'au moins une entité de réseau ;
recevoir des informations sur l'environnement (e(n)) par l'intermédiaire d'une interface d'environnement (ENi), les informations sur l'environnement (e(n)) représentant au moins partiellement l'état présent d'un environnement dans lequel la pluralité d'entités de réseau (AP1, UE1) fonctionnent, les informations sur l'environnement (e(n)) comprenant au moins l'un des éléments suivants : une position spatiale d'au moins un objet parmi une pluralité d'objets ne participant pas au réseau de radiocommunications, en particulier d'objets ne participant pas nécessairement au réseau de radiocommunications, une dimension spatiale de l'au moins un objet parmi une pluralité d'objets ne participant pas au réseau de radiocommunications, en particulier d'objets ne participant pas nécessairement au réseau de radiocommunications, une position spatiale et la taille d'une ouverture dans une pièce ou un bâtiment, un état de fonctionnement d'un actionneur pour ouvrir ou fermer une ouverture dans la pièce ou le bâtiment ;
déterminer une configuration (c(n+1)) pour l'une au moins de la pluralité d'entités de réseau (AP1, UE1) par l'intermédiaire d'une unité de détermination de configuration (102) en fonction des caractéristiques de fonctionnement du domaine radio reçues (r(n)) et en fonction des informations sur l'environnement reçues (e(n)) ; et
transmettre la configuration déterminée (c(n+1)) à l'une au moins de la pluralité d'entités de réseau (AP1, UE1) par l'intermédiaire d'une interface nord (NBi) et/ou d'une interface sud (SBi) afin de reconfigurer l'une au moins de la pluralité d'entités de réseau (AP1, UE1).

14. Gestionnaire de configuration de réseau (100) selon la revendication 13, dans lequel le gestionnaire de configuration de réseau (100) est configuré pour mettre en œuvre le procédé selon l'une des revendications 2 à 10.

15. Système comprenant le gestionnaire de configuration de réseau (100) selon la revendication 13 ou la revendication 14, et la pluralité d'entités de réseau (AP1, UE1) du réseau de radiocommunications (RCN).
